Europäisches Patentamt

European Patent Office

Office européen des brevets

(19)

(11) Veröffentlichungsnummer : **0 079 979
B1**

(12) **EUROPÄISCHE PATENTSCHRIFT**

(45) Veröffentlichungstag der Patentschrift :
26.03.86

(21) Anmeldenummer : 81109849.0

(22) Anmeldetag : 24.11.81

(51) Int. Cl.⁴ : **G 01 N   3/10**, G 01 N   3/30,
**F 15 B 15/17**

(54) **Hydraulische Belastungsvorrichtung, insbesondere für Katapultanlagen.**

(43) Veröffentlichungstag der Anmeldung :
**01.06.83 Patentblatt 83/22**

(45) Bekanntmachung des Hinweises auf die Patenterteilung : **26.03.86 Patentblatt 86/13**

(84) Benannte Vertragsstaaten :
**CH DE GB LI**

(56) Entgegenhaltungen :
DE-A- 2 944 116
FR-A-   559 284
FR-A- 1 399 512
FR-A- 2 120 217
GB-A- 2 034 008
GB-A- 2 034 443

(73) Patentinhaber : **CARL SCHENCK AG
Landwehrstrasse 55 Postfach 40 18
D-6100 Darmstadt (DE)**

(72) Erfinder : **Schneider, Peter, Dipl.-Ing.
Taunusstrasse 83
D-6101 Rossdorf (DE)**
Erfinder : **Beran, Josef, Dipl.-Ing.
Holzgasse 46
D-6101 Rossdorf (DE)**
Erfinder : **Keller, Günther, Ing. grad.
Am Felsenkeller 47
D-6101 Modautal 1 (DE)**
Erfinder : **Pohl, Andreas, Ing. grad.
Am Herrenhof 9
D-6102 Pfungstadt 2 (DE)**

(74) Vertreter : **Brand, Fritz, Dipl.-Ing.
Carl Schenck AG Patentabteilung Landwehrstrasse
55 Postfach 4018
D-6100 Darmstadt (DE)**

Jouve, 18, rue St-Denis, 75001 Paris, France

**Beschreibung**

Die Erfindung betrifft eine hydraulische Belastungsvorrichtung, insbesondere für Katapultanlagen, mit einem Belastungszylinder, einem im Zylinder axial verschiebbaren Differentialkolben, der auf einer Seite eine aus dem Zylinder nach außen reichende Kolbenstange aufweist, so daß seine beiden Kolbenstirnflächen unterschiedlich groß sind, einer hydraulischen Druckmittelquelle zur Betätigung des Kolbens sowie einem Absperrventil in der Verbindungsleitung zwischen Druckmittelquelle und Zylinder.

Bei hydraulischen Belastungsvorrichtungen, mit denen am Kolben bzw. an der Kolbenstange hohe Geschwindigkeiten erzeugt werden sollen, wie z. B. bei Katapultvorrichtungen, muß das benötigte Druckmittel innerhalb einer sehr kurzen Zeitspanne (im Millisekunden-Bereich) zugeführt werden. In der Zeiteinheit müssen also große Druckmittelmengen durchgesetzt werden. Die Ventile zur Steuerung oder Regelung solcher Zylinder sowie die Zuführungsleitungen müssen aus diesem Grund für einen entsprechend großen Druckmitteldurchfluß ausgelegt sein.

Bei hydraulischen Belastungsvorrichtungen der genannten Art sind Servoventile oder Ventilkombinationen vorgesehen, die die Druckmittelzufuhr zum Zylinder steuern. Nachteilig ist hierbei, daß insbesondere sehr große und teuere Ventileinheiten für die erforderlichen großen Druckmittelströme benötigt werden.

Bei einer anderen bekannten Anordnung werden mehrere Ventile zur Steuerung bzw. Regelung der Belastungsvorrichtung verwendet (DE-A-29 44 116).

Aus der Druckschrift FR-A-559 284 ist das Prinzip bekannt, einen Kolben in einem Zylinder dadurch zu verschieben, daß Druckmittel auf unterschiedlich große Stirnflächen des Kolbens gegeben wird.

Aufgabe der vorliegenden Erfindung ist es, eine hydraulische Belastungsvorrichtung mit einem Differentialkolben, insbesondere für Katapultanlagen zu schaffen, der einen einfachen Aufbau und kurze Leitungswege aufweist und bei dem einfache Ventileinheiten verwendbar sind. Weiterhin soll die Zufuhr großer Druckmittelmengen zum Belastungszylinder schnell und feinfühlig steuerbar und/oder regelbar sein. Der Zylinder soll auch als Gleichlaufzylinder verwendbar sein. Diese Aufgabe wird durch die im unabhängigen Patentanspruch 1 angegebenen Merkmale gelöst. Die abhängigen Ansprüche enthalten vorteilhafte und zweckmäßige Ausgestaltungen der Erfindung.

Vorteile der Erfindung ergeben sich aus der Aufgabenstellung. Durch direkte Verbindung der kleinen Zylinderkammer (Ringkammer) mit der Druckmittelquelle ist es möglich, zur Steuerung oder Regelung der Belastungsvorrichtung im einfachsten Fall nur ein einziges Absperrventil zu verwenden. Mit diesem Ventil kann der Zylinder sowohl in Zugrichtung (Ventil geschlossen) als auch in Druckrichtung (Ventil geöffnet) betätigt werden. Die direkte Verbindung der kleinen Zylinderkammer mit der Druckmittelquelle bewirkt, daß sich am Kolben eine nahezu konstante Gegenkraft einstellt. Dadurch wird die Steuerung oder Regelung des Zylinders erleichtert.

Vorteilhafte Ausgestaltungen ergeben sich, wenn das Absperrventil als steuerbares und/oder regelbares schnell öffnendes Ventil ausgebildet ist und wenn dieses Ventil einen Ventilschieber mit Überdeckung aufweist. Dadurch läßt sich eine besonders schnelle Ventilöffnung erreichen. Wenn das Absperrventil als Steuerventil ausgebildet ist, mit dem auch Druckmittel aus der angeschlossenen Zylinderkammer abgeführt werden kann, ist der Belastungszylinder auch als Gleichlaufzylinder (in Zug- und Druckrichtung gleich wirkend) verwendbar.

Die Erfindung wird an einem Ausführungsbeispiel in der Zeichnung dargestellt und in der Beschreibung näher erläutert. Es zeigen in schematischer Darstellung :

Figur 1 eine erfindungsgemäße Belastungsvorrichtung mit einem regelbaren oder steuerbaren Absperrventil

Figur 2 ein Absperrventil mit Ventilüberdeckung.

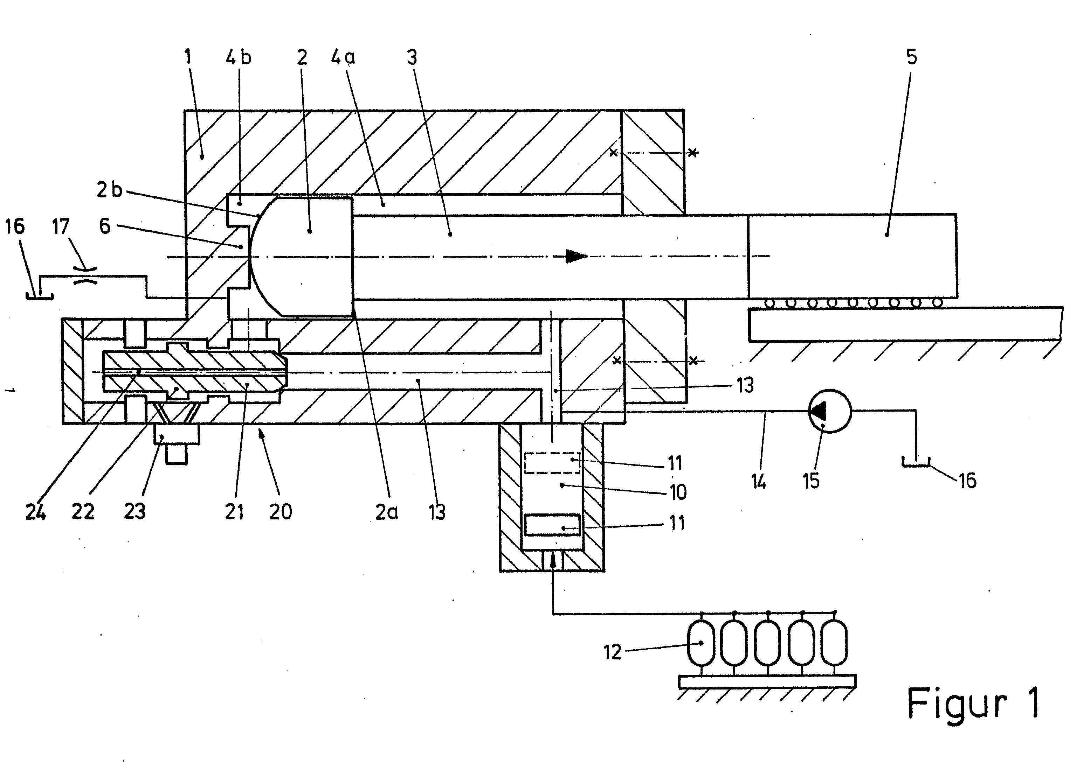

Fig. 1 zeigt den grundsätzlichen Aufbau der erfindungsgemäßen Anordnung. In einem Belastungszylinder 1 ist ein Differentialkolben 2 mit einer einseitig nach außen geführten Kolbenstange 3 angeordnet. Die Kolbenstange ist in geeigneter Weise z. B. mit einem Testschlitten 5 verbunden, auf dem sich ein zu prüfendes Objekt befindet. Durch den Kolben 2 und die Kolbenstange 3 wird dem zu prüfenden Objekt eine vorgegebene Geschwindigkeit oder Beschleunigung erteilt oder es wird ein vorgegebener Weg zurückgelegt.

Der Differentialkolben 2 weist unterschiedlich große Kolbenstirnflächen auf, nämlich an der Kolbenstangenseite die kleine Kolbenstirnfläche bzw. Ringfläche 2a und auf der gegenüberliegenden Seite die große Kolbenstirnfläche bzw. Kreisfläche 2b. Von den beiden Zylinderkammern 4a, b ist die durch die kleine Kolbenstirnfläche 2a begrenzte Zylinderkammer 4a bedingt durch die Kolbenstange ringförmig ausgebildet. Das Flächenverhältnis der Kreis- und der Ringfläche kann z. B. 2 : 1 betragen. Es können jedoch auch andere Flächenverhältnisse vorgesehen werden.

Am Belastungszylinder 1 ist ein hydraulischer Druckspeicher 10 bekannter Art, z. B. ein Kolbenspeicher, Blasenspeicher oder ein anderes hydraulisches Speicherelement angebaut. Der Speicher dient als Druckmittelquelle zur Versorgung des Belastungszylinders mit dem erforderlichen Druckmittel bzw. Druckmittelvolumen. In der Zeichnung ist ein Kolbenspeicher mit einem Speicherkolben 11 dargestellt. Der Speicherkolben trennt die Flüssigkeitsseite des Speichers von der Gasseite. Wenn das Gasvolumen 12, wie in der Zeichnung angedeutet, groß gewählt wird, läßt sich ein fast konstanter Versorgungsdruck unabhängig vom Füllungsstand des Speichers erreichen.

Der hydraulische Druckspeicher 10 ist über eine Verbindungsleitung 13 direkt mit der Zylinderkammer 4a (Ringkammer) verbunden. Absperrelemente in der Verbindungsleitung sind nicht vorhanden, sie können jedoch vorgesehen werden, um den Druckspeicher vom Belastungszylinder zu trennen. Mit der Zylinderkammer 4b ist der Druckspeicher über ein steuerbares oder regelbares Absperrventil 20 verbunden. An der Verbindungsleitung 13 ist eine weitere Leitung 14 angeschlossen, durch die der Belastungszylinder und der Druckspeicher über die Druckmittelpumpe 15 mit Drucköl aus einem Druckmittelvorratsbehälter 16 gefüllt werden. Die Druckmittelpumpe 15 kann auch so ausgelegt werden, daß sie zur Betätigung des Belastungszylinders 1 verwendbar ist. Die Art und Größe des Druckspeichers 10 in der Verbindungsleitung 13 bzw. 14 kann in diesem Fall so gewählt werden, daß Druckschwankungen bei der Druckmittelzufuhr ausgeglichen werden.

Die Verbindungsleitung 13 mündet mit Abstand vom Ende der Ringkammer 4a bzw. der Zylinderbohrung in die Kammer ein. Wenn der Kolben 2 im Betrieb die Einmündung passiert, wird die Verbindung zwischen der Zylinderkammer und der Verbindungsleitung 13 unterbrochen. Das in der Zylinderkammer 4a verbleibende Druckmittel kann nicht mehr abfließen und wirkt jetzt dämpfend auf die Bewegung des Kolbens 2 (Endlagendämpfung).

Die Zylinderkammer 4b ist über eine Drossel 17 mit dem Druckmittelvorratsbehälter 16 verbunden. Die Drossel ist so eingestellt, daß sich in der Zylinderkammer 4b, insbesondere bei der linken Endstellung des Kolbens 2, praktisch kein Druck aufbauen kann, wenn das Absperrventil 20 geschlossen ist.

Das Absperrventil 20 weist einen Ventilschieber 21 mit einem Betätigungskolben 22 auf. Der Betätigungskolben kann z. B. über ein kleines Servoventil 23 mit einem Druckmittel beaufschlagt werden. Damit kann der Öffnungsweg des Ventilschiebers 21 und damit die Druckmittelzufuhr vom Druckspeicher 10 zur Zylinderkammer 4b gesteuert oder geregelt werden. Der Ventilschieber 21 kann, wie in der Zeichnung angedeutet, mit einer Durchgangsbohrung 24 versehen und damit als entlasteter Schieber ausgebildet sein.

Das Absperrventil 20 kann wie dargestellt mit dem Belastungszylinder 1 zusammengebaut sein. Das Ventil kann jedoch auch getrennt vom Belastungszylinder angeordnet werden. Die Steuer- und Regeleinrichtung für das Absperrventil 20 bzw. das Servoventil 23 ist im einzelnen nicht dargestellt.

Zum Betrieb des Belastungsvorrichtung wird zunächst der Druckspeicher 10 mit der angeschlossenen Zylinderkammer 4a über die Leitung 14 durch die Pumpe 15 mit Druckmittel gefüllt.

Der Kolben 2 befindet sich hierbei in der linken Ausgangsstellung (Fig. 1) und liegt an einem Anschlag 6 an. Durch Betätigung des Absperrventils 20 wird der Zylinderkammer 4b Druckmittel zugeführt. Am Kolben 2 wirkt jetzt eine Kraft, die sich ergibt aus dem Öldruck und der Differenz der beiden Kolbenstirnflächen 2a und 2b. Der Kolben 2 und die Kolbenstange 3 mit dem angeschlossenen Testschlitten 5 bewegen sich in der gewünschten Weise mit einer vorgegebenen Geschwindigkeit oder Beschleunigung oder einem vorgegebenen Weg wie durch Pfeil angedeutet nach rechts.

Wenn das Absperrventil 20 geschlossen wird, fährt der Kolben 2, bedingt durch den in der Zylinderkammer 4a herrschenden Druck, selbsttätig in seine linke Ausgangsstellung zurück. Das in der Zylinderkammer 4b befindliche Druckmittel kann hierbei langsam durch die Drossel 17 in den Vorratsbehälter 16 zurückfließen.

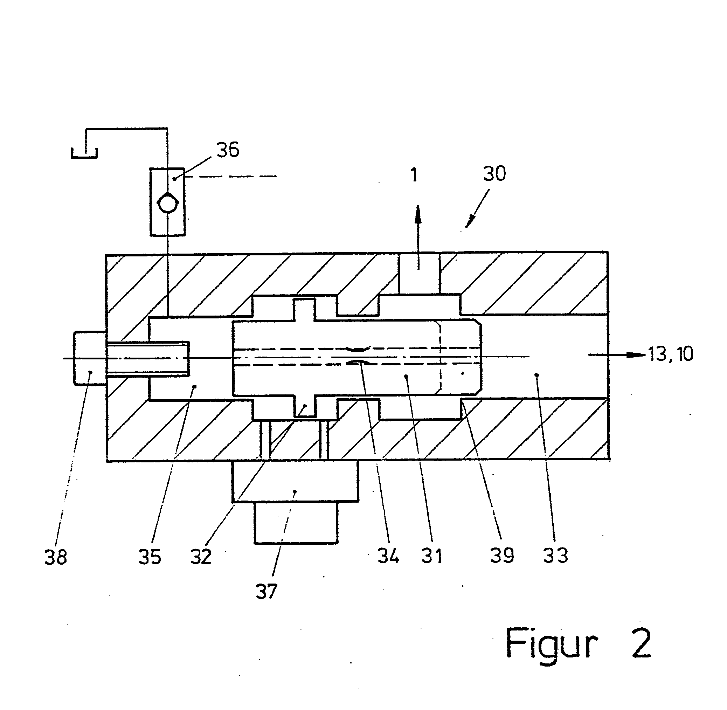

Das in Fig. 2 dargestellte Absperrventil 30 mit Ventilüberdeckung weist einen Ventilschieber 31 auf, der nicht auf einem Ventilsitz aufliegt, sondern in einer Ventilbohrung 33 gleitet. Im Ventilschieber ist eine Drosselbohrung 34 angeordnet, durch die Druckmittel vom Speicher oder einer Druckmittelquelle in den Ventilraum 35 gelangen kann. Der Ventilraum 35 kann über ein Rückschlagventil 36 von außen entlastet bzw. geöffnet werden. Am Absperrventil 30 ist weiterhin ein Schaltventil 37 angebaut, mit dem der Betätigungskolben 32 des Ventilschiebers 31 beaufschlagt werden kann. In den Ventilraum 35 ragt ein einstellbarer Anschlag 38 für die Begrenzung des Ventilschieberweges (Hubbegrenzung).

In der rechten Ausgangsstellung des Ventilschiebers 31 sperrt das Ventil den Durchfluß vom Speicher 10 zum Belastungszylinder 1 ab. Bei Öffnung des Rückschlagventils 36 von außen, wird der Ventilraum 35 drucklos und der Ventilschieber 31 beginnt sich nach links zu bewegen. Hierbei bleibt das Ventil zunächst jedoch geschlossen. Erst wenn der Schieber die Steuerkante 39 erreicht hat, öffnet das Ventil. Zu diesem Zeitpunkt hat der Ventilschieber bereits eine bestimmte Öffnungsgeschwindigkeit erreicht, so daß der Ventilquerschnitt jetzt besonders schnell freigegeben wird. Die Öffnungszeiten liegen hierbei im Bereich von Millisekunden. Die Öffnungsgeschwindigkeit des Ventilschiebers 31 kann durch die Beaufschlagung des Betätigungskolbens 32 mit einem Druckmittel über das Schaltventil 37 noch erhöht werden.

Nach Beendung eines Prüfvorganges wird das Rückschlagventil 36 wieder geschlossen. Über das Schaltventil 37 wird der Betätigungskolben 32 des Ventilschiebers mit einem Druckmittel beaufschlagt und das Absperrventil 30 wieder in Schließstellung gebracht.

Das in Fig. 1 dargestellte Absperrventil 20 kann durch ein geeignetes Steuerventil ersetzt werden, mit dem sowohl Druckmittel in den Zylinderraum 4b zugeführt als auch aus dem Zylinderraum abgeführt werden kann. Die Drossel 17 wird in diesem Fall geschlossen bzw. entfällt. Mit einem solchen Steuerventil ist es möglich, den Belastungszylinder 1 mit dem Differentialkolben 2 als sogenannten Gleichlaufzylinder zu verwenden, d. h. als Zylinder, der in Zugrichtung und in Druckrichtung gleiche Kräfte erzeugt bzw. gleich wirkt. Das Verhältnis der Kolbenflächen 2b : 2a wird in diesem Fall zweckmäßig 2 : 1 gewählt, d. h. der Kolben wird so ausgebildet, daß die Kreiskolbenfläche 2b doppelt so groß ist wie die Ringkolbenfläche 2a. Die Druckmittelversorgung erfolgt z. B. über eine zweckmäßig ausgelegte Druckmittelpumpe 15, wobei in der Verwendungsleitung 13, 14 zwischen Pumpe 15 und Belastungszylinder 1 ein geeigneter Druckspeicher 10 zum Ausgleich von Druckschwankungen angeordnet sein kann.

In der Zylinderkammer 4a herrscht ständig der Systemdruck bzw. der von der Druckmittelpumpe 15 erzeugte Maximaldruck. In der Zylinderkammer 4b kann der Druck je nach Ansteuerung des Steuerventils zwischen Null und dem Maximaldruck liegen. Herrscht in der Zylinderkammer 4b Maximaldruck, so bewegt sich der Kolben im dargestellten Ausführungsbeispiel nach rechts bzw. erzeugt eine nach rechts gerichtete Kraft, da die Kolbenstirnfläche 2b doppelt so groß ist wie die Kolbenstirnfläche 2a und in beiden Kammern gleicher Druck herrscht. Die Kolbenkraft ergibt sich aus dem System- bzw. Maximaldruck und aus der Differenz der Kolbenstirnflächen 2b und 2a. Wenn sich der Kolben in Fig. 1 nach rechts bewegt, wird des Druckmittel in der Zylinderkammer 4a lediglich in die Zylinderkammer 4b umgepumpt.

Bei Druck Null in der Zylinderkammer 4b bewegt sich der Kolben nach links, bzw. es entsteht am Kolben und an der Kolbenstange eine nach links gerichtete Kraft, da jetzt nur der Druck in der Zylinderkammer 4a wirkt. Der Druck in der Zylinderkammer 4b und damit die Kolbenbewegung bzw. die Kolbenkraft in beiden Bewegungsrichtungen kann durch entsprechende Ansteuerung des Steuerventils beliebig gesteuert werden. Durch die erfindungsgemäße Anordnung kann also mit einem Differentialzylinder die gleiche Kraft in beiden Bewegungsrichtungen des Kolbens ausgeübt werden. Als Steuerventil kann z. B. ein Mehrwegeventil oder ein Servoventil verwendet werden.

**Patentansprüche**

1. Hydraulische Belastungsvorrichtung, insbesondere für Katapultanlagen, mit einem Belastungszylinder (1), einem im Zylinder axial verschiebbaren Differentialkolben (2), der auf einer Seite eine aus dem Zylinder nach außen reichende Kolbenstange (3) aufweist, so daß seine beiden Kolbenstirnflächen (2a, 2b) unterschiedlich groß sind, einer hydraulischen Druckmittelquelle (10, 15) zur Betätigung des Kolbens sowie einem Absperrventil (20, 30) in der Verbindungsleitung (13) zwischen Druckmittelquelle (10, 15) und Zylinder (1) dadurch gekennzeichnet, daß die Druckmittelquelle (10, 15) mit der durch die kleine Kolbenstirnfläche (2a) begrenzten Zylinderkammer (4a) unmittelbar und mit der durch die große Kolbenstirnfläche (2b) begrenzten Zylinderkammer (4b) über das Absperrventil (20, 30) verbunden ist.

2. Hydraulische Belastungsvorrichtung nach Anspruch 1, dadurch gekennzeichnet, daß das Absperrventil (20, 30) als steuerbares und/oder regelbares schnell öffnendes Ventil ausgebildet ist.

3. Hydraulische Belastungsvorrichtung nach Anspruch 2, dadurch gekennzeichnet, daß das schnell öffnende Ventil (20, 30) einen Ventilschieber (31) mit Überdeckung aufweist.

4. Hydraulische Belastungsvorrichtung nach einem der Ansprüche 1 bis 3, dadurch gekennzeichnet, daß die Druckmittelquelle als Druckspeicher (10), insbesondere Gasdruckspeicher, ausgebildet ist.

5. Hydraulische Belastungsvorrichtung nach einem der Ansprüche 1 bis 4, dadurch gekennzeichnet, daß die Einmündung der Verbindungsleitung (13) zwischen Druckmittelquelle (10, 15) und Belastungszylinder (1) in die durch die kleine Kolbenstirnfläche (2a) begrenzte Zylinderkammer (4a) mit Abstand vom Ende dieser Zylinderkammer angeordnet ist.

6. Hydraulische Belastungsvorrichtung nach einem der Ansprüche 1 bis 5, dadurch gekennzeichnet, daß die durch die große Kolbenstirnfläche (2b) begrenzte Zylinderkammer (4b) über eine Drossel (17) mit einer Rücklaufleitung oder einem Vorratsbehälter (16) verbunden ist.

7. Hydraulische Belastungsvorrichtung nach einem der Ansprüche 1 bis 6, dadurch gekennzeichnet, daß das Absperrventil (20, 30) als Schaltventil ausgebildet ist, das einen Betätigungskolben (22, 32) aufweist.

8. Hydraulische Belastungsvorrichtung nach einem der Ansprüche 1 bis 3 und 5 bis 7, dadurch gekennzeichnet, daß in der Verbindungsleitung (13, 14) zwischen Druckmittelquelle (15) und Belastungszylinder (1) ein Druckspeicher (10) angeordnet ist.

9. Hydraulische Belastungsvorrichtung nach einem der vorhergehenden Ansprüche, dadurch gekennzeichnet, daß das Verhältnis der Kolbenstirnflächen (2a, 2b) des Differentialkolbens (2) 2 : 1 beträgt.

10. Hydraulische Belastungsvorrichtung nach einem der vorhergehenden Ansprüche, dadurch gekennzeichnet, daß das Absperrventil als Steuerventil ausgebildet ist, mit dem Druckmittel in die durch die große Kolbenstirnfläche (2b) begrenzte Zylinderkammer (4b) zuführbar und aus dieser abführbar ist.

**Claims**

1. Hydraulic loading device, especially for catapult systems, with a load cylinder (1), a differential piston (2) which is axially slidable in the cylinder, and which on one side has a piston rod (3) extending externally out of the cylinder, so that its two piston end surfaces (2a, 2b) are of different sizes, a hydraulic pressure medium source (10, 15) for actuating the piston and also a shutoff valve (20, 30) in the connecting duct (13) between the pressure medium source (10, 15) and the cylinder (1), characterized in that the pressure medium source (10, 15) is directly connected with the cylinder chamber (4a) defined by the small piston end surface (2a) and is connected with the cylinder chamber (4b) defined by the large piston end surface (2b) via the shutoff valve (20, 30).

2. Hydraulic loading device according to Claim 1, characterised in that the shutoff valve (20, 30) is constructed as a controllable and/or regulatable rapid-opening valve.

3. Hydraulic loading device according to Claim 2, characterised in that the rapid-opening valve (20, 30) has a valve slide (31) with an overlap.

4. Hydraulic loading device according to one of Claims 1 to 3, characterized in that the pressure medium source is constructed as a pressure reservoir (10) in particular a gas pressure reservoir.

5. Hydraulic loading device according to one of Claims 1 to 4, characterized in that the opening of the connecting duct (13) between the pressure medium source (10, 15) and the load cylinder (1) into the cylinder chamber (4a) defined by the small piston end surface (2a) is arranged at a distance from the end of this cylinder chamber.

6. Hydraulic loading device according to one of Claims 1 to 5, characterized in that the cylinder chamber (4b) defined by the large piston end surface (2b) is connected via a throttle (17) with a return duct or with a storage container (16).

7. Hydraulic loading device according to one of Claims 1 to 6, characterized in that the shutoff valve (20, 30) is constructed as a switching valve, which has an actuating piston (22, 32).

8. Hydraulic loading device according to one of Claims 1 to 3 and 5 to 7, characterized in that a pressure reservoir (10) is arranged in the connecting duct (13, 14) between the pressure medium source (15) and load cylinder (1).

9. Hydraulic loading device according to one of the preceding Claims, characterized in that the ratio of the piston end surfaces (2a, 2b) of the differential piston (2) is 2 : 1.

10. Hydraulic loading device according to one of the preceding Claims, characterized in that the shutoff valve is constructed as a control valve, with which pressure medium can be fed into the cylinder chamber (4b) defined by the large piston end surface (2b) and can be removed therefrom.

## Revendications

1. Dispositif hydraulique de mise en charge, en particulier pour système à catapulte, comportant un cylindre de charge (1), un piston différentiel (2) coulissant axialement dans le cylindre et qui présente d'un côté une tige de piston (3) dépassant à l'extérieur du cylindre de sorte que ses deux faces de piston (2a, 2b) aient des dimensions différentes, une source de fluide de pression hydraulique (10, 15) pour actionner le piston, ainsi qu'un clapet d'obturation (20, 30) situé dans la conduite de liaison (13) entre la source de fluide de pression (10, 15) et le cylindre (1) caractérisé par le fait que la source de fluide de pression (10, 15) est reliée directement à la chambre de cylindre (4a) délimitée par la petite face de piston (2a), et par l'intermédiaire du clapet d'obturation (20, 30) à la chambre de cylindre (4b) délimitée par la grande face de piston (2b).

2. Dispositif hydraulique de mise en charge selon la revendication 1 caractérisé par le fait que le clapet d'obturation (20, 30) est constitué par un clapet commandable et/ou réglable à ouverture rapide.

3. Dispositif hydraulique de mise en charge selon la revendication 2 caractérisé par le fait que le clapet à ouverture rapide (20, 30) présente un tiroir (31) à recouvrement.

4. Dispositif hydraulique de mise en charge selon l'une des revendications 1 à 3, caractérisé par le fait que la source de fluide hydraulique est conformée en accumulateur de pression, et en particulier en accumulateur de pression de gaz.

5. Dispositif hydraulique de mise en charge selon l'une des revendications 1 à 4 caractérisé par le fait que l'embouchure de la conduite de liaison (13) entre la source de fluide de pression (10, 15) et le cylindre de mise en charge (1) est disposée dans la chambre de cylindre (4a) délimitée par la petite face de piston (2a) à distance de l'extrémité de cette chambre.

6. Dispositif hydraulique de mise en charge selon l'une des revendications 1 à 5 caractérisé en ce que la chambre de cylindre (4b) délimitée par la grande face de piston (2b) est reliée à une conduite de retour ou à une bâche (16) par l'intermédiaire d'un étranglement (17).

7. Dispositif hydraulique de mise en charge selon l'une des revendications 1 à 6 caractérisé par le fait que le clapet d'obturation (20, 30) est conformé en clapet de commutation présentant un piston d'actionnement.

8. Dispositif hydraulique de mise en charge selon l'une des revendications 1 à 3 et 5 à 7 caractérisé par le fait qu'un accumulateur de pression (10) est disposé dans la conduite de liaison (13, 14), entre la source de fluide de pression et le cylindre de mise en charge.

9. Dispositif hydraulique de mise en charge selon l'une des revendications précédentes caractérisé par le fait que les surfaces des faces de piston (2a, 2b) du piston différentiel (2) sont dans un rapport de 2 : 1.

10. Dispositif hydraulique de mise en charge selon l'une des revendications précédentes caractérisé par le fait que le clapet d'obturation est constitué par un clapet de commande, au moyen duquel du fluide de pression est amené dans la chambre (4b) délimitée par la grande face de piston (2b) et en est évacué.

Figur 1

Figur 2